Europäisches Patentamt

European Patent Office

Office européen des brevets

(19)

(11) Veröffentlichungsnummer : **0 092 099**
**B1**

(12) # EUROPÄISCHE PATENTSCHRIFT

(45) Veröffentlichungstag der Patentschrift :
19.10.88

(51) Int. Cl.⁴ : **C 08 F297/08**

(21) Anmeldenummer : 83103310.5

(22) Anmeldetag : 05.04.83

(54) **Verfahren zum Herstellen von Propylen-Ethylen-Polymerisaten vom Typ der sogenannten "Block-Copolymerisate".**

(30) Priorität : 17.04.82 DE 3214246

(43) Veröffentlichungstag der Anmeldung :
26.10.83 Patentblatt 83/43

(45) Bekanntmachung des Hinweises auf die Patenterteilung : 19.10.88 Patentblatt 88/42

(84) Benannte Vertragsstaaten :
AT BE DE FR GB IT NL

(56) Entgegenhaltungen :
EP-A- 0 079 000
DE-A- 1 495 105
DE-A- 2 920 729
DE-A- 3 210 003
GB-A- 1 032 945
CHEMICAL ABSTRACTS, Band 99, Nr. 2, Juli 1983, p.
11, Zusammenfassung Nr. 6217s, COLUMBUS OHIO
(US)
Die Akte enthält technische Angaben, die nach dem
Eingang der Anmeldung eingereicht wurden und die
nicht in dieser Patentschrift enthalten sind.

(73) Patentinhaber : BASF Aktiengesellschaft
Carl-Bosch-Strasse 38
D-6700 Ludwigshafen (DE)

(72) Erfinder : Schweier, Günther, Dr.
Friedrich-Pietsch-Strasse 14
D-6701 Friedelsheim (DE)
Erfinder : Gruber, Wolfgang, Dr.
Lorscher Ring 2 b
D-6710 Frankenthal (DE)
Erfinder : Metzger, Werner, Dr.
Bergstrasse 12
D-6717 Hessheim (DE)
Erfinder : Hennenberger, Peter, Dr.
Am Mandelgarten 19
D-6713 Freinsheim (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

## Beschreibung

Die vorliegende Erfindung betrifft ein Verfahren zum kontinuierlichen Herstellen von Propylen-Ethylen-Polymerisaten vom Typ der sogenannten « Block-Copolymerisate », wobei man jeweils in Anwesenheit von Wasserstoff als Molekulargewichtsregler in einem bewegten Festbett aus kleinteiligem Polymerisat bei Abwesenheit eines flüssigen Reaktionsmediums aus der Gasphase heraus zunächst

(I) in einer ersten Polymerisationszone Propylen durch Zufuhr eines Ziegler-Natta-Katalysatorsystems aus

(1) einer Titan-III-Komponente,
(2) einer Dialkylaluminiumchlorid-Komponente sowie
(3) — gegebenenfalls — einer weiteren Katalysator-Komponente homopolymerisiert und dann

(II) in einer zweiten Polymerisationszone ein Gemisch aus Propylen und Ethylen durch Zufuhr des in der ersten Polymerisationszone erhaltenen Reaktionsguts dem darin vorliegenden Propylen-Homopolymerisat hinzupolymerisiert,

mit den Maßgaben, daß (i) das Atomverhältnis Titan aus der Titan-III-Komponente (1) : Aluminium aus der Dialkylaluminiumchlorid-Komponente (2) im Bereich von 1 : 2 bis 1 : 15 liegt, und (ii) das Verhältnis Gewicht des in der ersten Polymerisationszone in Polymerisat umgesetztes Propylen : Gewicht des in der 2. Polymerisationszone in Polymerisat umgesetztes Gemisch aus Propylen und Ethylen 100 : 5 bis 100 : 30, insbesondere 100 : 10 bis 100 : 25 beträgt.

Verfahren dieser Gattung — d. h. insbesondere Verfahren, für die es essentiell ist, in einem bewegten Bett aus kleinteiligem Polymerisat bei Abwesenheit eines flüssigen Reaktionsmediums zu arbeiten — sind bekannt und haben sich in der industriellen Praxis eingeführt. Ihre Entwicklung spiegelt sich wider in den Verfahren, wie sie zunächst aus der GB-PS 837 301, dann der GB-PS 1 006 469 und schließlich der GB-PS 1 032 945 bekannt geworden sind, — wobei es sich als günstig herausgestellt hat, jede der Stufen (I) und (II) des Verfahrens aus der letztgenannten Patentanschrift so auszugestalten wie die Einzelstufe des aus der GB-PS 1 354 020 bekanntgewordenen Verfahrens.

Die bekannten Verfahren der in Rede stehenden Gattung haben sich, übers Ganze gesehen, in der Technik bewährt ; — was indessen nicht ausschließt, daß sie noch den einen oder anderen Wunsch offenlassen. So ist z. B. bislang das erstrebenswerte Ziel nicht zu erreichen gewesen, Polymerisate zu gewinnen, die einerseits eine hohe Schlagzähigkeit, insbesondere eine hohe Schlagzähigkeit in der Kälte, und andererseits zugleich eine gute Rieselfähigkeit haben : Arbeitet man so, daß die Schlagzähigkeit hoch wird, so fallen — insbesondere in der zweiten Polymerisationszone — Polymerisate an, deren Rieselfähigkeit unbefriedigend ist ; wobei letzteres vor allem bedingt wird durch eine gewisse Klebrigkeit der Polymerisate, die u. a. die Rührbarkeit (d. h. die Durchmischung und damit letztlich auch den Wärmeaustausch) behindert, die Gefahr von Wandbelägen mit sich bringt sowie die Förderbarkeit beeinträchtigt.

Aus dieser unerwünschten Gegenläufigkeit des Eigenschafts-Paares Kälteschlagzähigkeit/Rieselfähigkeit führt auch die Lehre der DE-A-2 290 729 nicht heraus : Überträgt man die dort offenbarten Verfahrensparameter auf das eingangs definierte, der vorliegenden Erfindung zugrundeliegende kontinuierliche Polymerisationsverfahren, so erhält man Verfahrensprodukte, d. h. Propylen-Ethylen-Polymerisate vom Typ der sogenannten « Block-Copolymerisate », mit anderen Eigenschaften.

Hier setzt die Aufgabe an, die zur vorliegenden Erfindung geführt hat : Das eingangs definierte Verfahren so auszugestalten, d. h. so zu verbessern, daß es mit dem vorerwähnten Nachteil nicht mehr oder nur noch in erheblich vermindertem Maße belastet ist.

Es wurde gefunden, daß die gestellte Aufgabe gelöst werden kann, wenn man (i) einerseits in der ersten sowie in der zweiten Polymerisationszone jeweils bei bestimmten Gesamtdrücken, bestimmten Temperaturen sowie spezifischen Relationen der Partialdrücke der Reaktanten arbeitet und (ii) andererseits zugleich jeweils zwischen der ersten und der zweiten Polymerisationszone bestimmte Differenzen im Gesamtdruck und in der Temperatur einstellt sowie die Relationen der Partialdrücke in den verschiedenen Zonen ihrerseits in eine spezifische Relation zueinander setzt.

Gegenstand der Erfindung ist dementsprechend ein Verfahren zum kontinuierlichen Herstellen von Propylen-Ethylen-Polymerisaten vom Typ der sogenannten « Block-Copolymerisate », wobei man jeweils in Anwesenheit von Wasserstoff als Molekulargewichtsregler in einem bewegten Festbett aus kleinteiligem Polymerisat (worunter man in der Fachsprache bekanntlich versteht ein Schüttgutbett aus kleinteiligem Polymerisat, welches durch Rühren in Bewegung gehalten wird) bei Abwesenheit eines flüssigen Reaktionsmediums aus der Gasphase heraus zunächst

(I) in einer ersten Polymerisationszone Propylen durch Zufuhr eines Ziegler-Natta-Katalysatorsystems aus

(1) einer Titan-III-Komponente,

(2) einer Dialkylaluminiumchlorid-Komponente sowie

(3) — gegebenenfalls — einer weiteren Katalysator-Komponente homopolymerisiert und dann

(II) in einer zweiten Polymerisationszone ein Gemisch aus Propylen und Ethylen durch Zufuhr des in der ersten Polymerisationszone erhaltenen Reaktionsguts dem darin vorliegenden Propylen-Homopolymerisat hinzupolymerisiert,

mit den Maßgaben, daß (i) das Atomverhältnis Titan aus der Titan-III-Komponente (1) : Aluminium aus der Dialkylaluminiumchlorid-Komponente (2) im Bereich von 1 : 2 bis 1 : 15 liegt, und (ii) das Verhältnis Gewicht des in der ersten Polymerisationszone in Polymerisat umgesetztes Propylen : Gewicht des in der 2. Polymerisationszone in Polymerisat umgesetztes Gemisch aus Propylen und Ethylen 100 : 5 bis 100 : 30, insbesondere 100 : 10 bis 100 : 25 beträgt.

Das erfindungsgemäße Verfahren ist dadurch gekennzeichnet, daß

(a) in der ersten Polymerisationszone bei einem Gesamtdruck von 11 bis 40, vorzugsweise 24 bis 33 bar sowie einer Temperatur von 60 bis 80, vorzugsweise 70 bis 75 °C gearbeitet wird, mit der Maßgabe, daß das Verhältnis Propylen-Partialdruck : Wasserstoff-Partialdruck (P/H-I) 100 : 0,1 bis 10 : 15, vorzugsweise 100 : 0,5 bis 10 beträgt,

(b) in der zweiten Polymerisationszone bei einem Gesamtdruck von 7 bis 20, vorzugsweise 10 bis 16 bar sowie einer Temperatur von 50 bis 55 °C gearbeitet wird, mit den Maßgaben, daß (i) das Verhältnis Propylen-Partialdruck : Ethylen-Partialdruck 100 : 20 bis 100 : 50 und (ii) das Verhältnis Propylen-Partialdruck : Wasserstoff-Partialdruck (P/H-II) 100 : 5 bis 50 beträgt,

(c) der Gesamtdruck in der ersten Polymerisationszone um wenigstens 10 bar höher gehalten wird als der Gesamtdruck in der zweiten Polymerisationszone,

(d) die Temperatur in der zweiten Polymerisationszone um wenigstens 15 °C niedriger gewählt wird als die Temperatur in der ersten Polymerisationszone, und

(e) das Verhältnis Propylen-Partialdruck : Wasserstoff-Partialdruck in der ersten Polymerisationszone (P/H-I) zu dem Verhältnis Propylen-Partialdruck : Wasserstoff-Partialdruck in der zweiten Polymerisationszone (P/H-II) so eingestelt wird, daß die Relation P/H-I : P/H-II einen Wert von 2 bis 70 hat.

Zu dem erfindungsgemäßen Verfahren ist im einzelnen das folgende zu bemerken :

Das Polymerisationsverfahren als solches kann — unter Beachtung der kennzeichnenden Besonderheiten — in den einschlägig üblichen technologischen Ausgestaltungen durchgeführt werden. Diese Ausgestaltungen — mit anderen Worten : die technologischen Varianten der kontinuierlichen Gasphasen-Block-Copolymerisation von Propylen/Ethylen in zwei Polymerisationszonen nach Ziegler-Natta — sind, wie eingangs dargelegt, aus der Literatur und Praxis wohlbekannt, so daß sich nähere Ausführungen zu ihnen erübrigen.

Der Vollständigkeit halber ist allenfalls zu erwähnen, daß beim erfindungsgemäßen Verfahren die Komponenten des Katalysatorsystems in mannigfacher Weise in die erste Polymerisationszone eingebracht werden können, z. B. (i) die Titan-III-Komponente (1), die Dialkylaluminiumchlorid-Komponente (2) sowie — gegebenenfals — die weitere Katalysatorkomponente (3) alle örtlich gemeinsam, (ii) die gleichen Komponenten alle örtlich getrennt voneinander, (iii) die Komponente (1) einerseits und ein Gemisch aus den Komponenten (2) und (3) andererseits örtlich getrennt voneinander — was von besonderem Vorteil sein kann —, oder (iiii) ein Gemisch aus dem Komponenten (1) und (3) einerseits und die Komponente (2) andererseits örtlich getrennt voneinander.

Es versteht sich ferner von selbst, daß bei dem neuen Verfahren mit sinkenden Werten des Verhältnisses Propylen-Partialdruck : Wasserstoff-Partialdruck (P/H-I) in der ersten Polymerisationsstufe im Endergebnis Polymerisate mit steigenden Werten des Schmelzindex' erhalten werden ; — et vice versa. Wie sich ferner gezeigt hat, bedingen — in der ersten und/oder zweiten Polymerisationszone — steigende Werte des Propylen : Wasserstoff Partialdruck-Verhältnisses eine Verringerung der Kleinstkornanteile im Polymerisat.

Was die stoffliche Seite der beim erfindungsgemäßen Verfahren einzusetzenden Katalysatorsysteme betrifft, ist im einzelnen das folgende zu sagen :

Zur Titan-III-Komponente (1) :

Hier kommen die einschlägig üblichen in Betracht, wobei sich u. a. die folgenden — zur Verwendung im erfindungsgemäßen Verfahren besonders geeigneten — zwei Gruppen hervorheben :

(1a) Titantrichloride als solche und Tiantrichlorid-Cokristallisate mit Metallhalogeniden, insbesondere Aluminiumchlorid etwa der Formel $TiCl_3 \cdot 1/3\ AlCl_3$.

Siehe hierzu z. B. die US-PS 3 128 252 und 3 814 743.

Wie sich gezeigt hat, ist aus dieser Gruppe für den erfindungsgemäßen Zweck besonders gut geeignet ein sehr feinteiliges Cokristallisat der Formel $TiCl_3 \cdot 1/3\ AlCl_3$.

(1b) Mit Elektronendonatoren bzw. Lewis-Basen modifizierte Titantrichloride bzw. Titantrichlorid-Cokristallisate der unter (1a) bezeichneten Art. Derartige modifizierte Titantrichlorid-Katalysatorkomponenten gibt es in zahlreichen Varianten, da sie bekanntlich eine Reihe von Vorteilen mit sich bringen. Um unnötige Wiederholungen zu vermeiden sei im gegebenen Zusammenhang schlaglichtartig beispielsweise verwiesen auf die GB-PS 851 113.

Für den erfindungsgemäßen Zweck ist diese Gruppe am besten geeignet, namentlich sehr feinteilige Cokristallisate der Formel $TiCl_3$ 90 1/3 $AlCl_3$, welche mit den folgenden Donatoren bzw. Basen modifiziert sind : Ethern, wie dem Di-n-butylether und dem Diisopentylether, Estern, wie den Benzoesäure-$C_1$- bis $C_5$-Alkylestern und dem Phenylessigsäureethylester ; Phosphinen, wie dem Tributylphosphin ; Phosphinoxiden, wie dem Triphenylphosphinoxid ; sowie Säureamiden.

Die Art und Weise der Modifizierung im einzelnen können die einschlägig üblichen sein, wobei z. B. hervorzuheben sind die für den erfindungsgemäßen Zweck besonders geeigneten Modifizierungen gemäß den GB-PS 1 447 706, 1 485 181 und 1 512 730 sowie den US-PS 4 120 823, 4 154 699, 4 154 700 und 4 229 318.

Zur Dialkylaluminiumchlorid-Komponente (2) :

Als Dialkylaluminiumchlorid-Komponente kommen ebenfalls die einschlägig üblichen in Betracht ; sie sind aus Literatur und Praxis so wohlbekannt, daß auf sie nicht näher eingegangen zu werden braucht. Als herausragender Vertreter sei beispielsweise genannt das Diethylaluminiumchlorid.

Zu den — gegebenenfalls mitzuverwendenden — weiteren Katalysator-Komponenten (3) :

Auch hier kommen wiederum die einschlägig üblichen — in den üblichen Mengen — in Betracht ; sie sind ebenfalls aus Literatur und Praxis so wohlbekannt, daß auf sie nicht näher eingegangen zu werden braucht.

Hervorzuheben ist jedoch, daß für den erfindungsgemäßen Zweck als weitere Katalysator-Komponenten (3) mit ganz besonderem Erfolg gewisse phenolische Stoffe eingesetzt werden können. Es handelt sich dabei — sowohl qualitativ als auch quantitativ — um die gleichen phenolischen Stoffe wie sie im Rahmen der US-PS 4 260 710 beschrieben sind. Anstelle unnötiger Wiederholungen wird daher diese Patentschrift insoweit zu einem Bestandteil der Offenbarung der vorliegenden Erfindung gemacht.

Insgesamt läßt sich sagen, daß die stoffliche Seite des erfindungsgemäßen Verfahrens als solche im Rahmen des einschlägig üblichen liegt.

## Beispiel 1

In einer einschlägig üblichen Vorrichtung (einer sog. « Kaskade » ; vgl. dazu die GB-PS 1 032 945) wurde kontinuierlich ein Propylen-Ethylen-Polymerisat vom Typ der sogenannten « Block-Copolymerisate » hergestellt, indem man jeweils in einem bewegten Festbett (einem gerührten konzentrischen Festbett) aus kleinteiligem Polymerisat und in Abwesenheit eines flüssigen Reaktionsmediums aus der Gasphase heraus zunächst

(I) in einer ersten Polymerisationszone mit einem Nutzvolumen von 200 l Propylen durch kontinuierliche, getrennt dosierte Zufuhr eines Ziegler-Natta-Katalysatorsystems aus

(1) einer gemäß Beispiel 2 der GB-PS 1 485 181 hergestellten Titan-III-Komponente (Menge : 15,8 mmol/h, gerechnet als Titan),
(2) Diethylaluminiumchlorid sowie
(3) n-Octadecyl-β-(4'-oxy-3',5'-di-tert.-butylphenyl)-propionat

homopolymerisierte und dann

(II) in einer zweiten Polymerisationszone mit einem Nutzvolumen von 200 l ein Gemisch aus Propylen und Ethylen durch Zufuhr des in der ersten Polymerisationszone erhaltenen Reaktionsguts dem darin vorliegenden Propylen-Homopolymerisat hinzu polymerisierte,

mit den Maßgaben, daß (i) das Atomverhältnis Titan aus der Titan-III-Komponente (1) : Aluminium aus der Dialkylaluminiumchlorid-Komponente (2) 1 : 7 und das Molverhältnis Titan aus der Titan-III-Komponente (1) : weiterer Katalysatorkomponente (3) — d. h. dem n-Octadecyl-β-(4'-oxy-3',5'-di-tert.-butylphenyl)-propionat — 1 : 0,3 betrug, und (ii) das Verhältnis Gewicht des in der ersten Polymerisationszone in Polymerisat umgesetztes Propylen : Gewicht des in der 2. Polymerisationszone in Polymerisat umgesetztes Gemisch aus Propylen und Ethylen 100 : 17 betrug.

Das Verfahren wurde erfindungsgemäß im einzelnen so durchgeführt, daß

(a) in der ersten Polymerisationszone bei einem Gesamtdruck von 28 bar sowie einer Temperatur von 70 °C gearbeitet wurde, mit der Maßgabe, daß das Verhältnis Propylen-Partialdruck : Wasserstoff-Partialdruck (P/H-I) 100 : 8 betrug,

(b) in der zweiten Polymerisationszone bei einem Gesamtdruck von 11 bar sowie einer Temperatur von 50 °C gearbeitet wurde, mit den Maßgaben, daß (i) das Verhältnis Propylen-Partialdruck : Ethylen-Partialdruck 100 : 40 und (ii) das Verhältnis Propylen-Partialdruck : Wasserstoff-Partialdruck (P/H-II) 100 : 42 betrug,

(c) der Gesamtdruck in der ersten Polymerisationszone also um 17 bar höher gehalten wurde als der Gesamtdruck in der zweiten Polymerisationszone,

(d) die Temperatur in der zweiten Polymerisationszone um 20 °C niedriger gewählt wurde als die Temperatur in der ersten Polymerisationszone, und

(e) das Verhältnis Propylen-Partialdruck : Wasserstoff-Partialdruck in der ersten Polymerisationszone (P/H-I) zu dem Verhältnis Propylen-Partialdruck : Wasserstoff-Partialdruck in der zweiten Polymerisationszone (P/H-II) so eingestellt wurde, daß die Relation P/H-I : P/H-II einen Wert von 5,2 hatte.

Auf diese Weise wurde 17,5 kg/h Polymerisat mit einem Schmelzindex (gemessen bei 230 °C nach DIN 53 735) von 15 g/10 min erhalten ; es wies eine gute Schlagzähigkeit sowie gute morphologische Eigenschaften, insbesondere auch eine gute Rieselfähigkeit auf.

Beispiel 2

In der gleichen Vorrichtung wie in Beispiel 1 wurde wiederum kontinuierlich ein Propylen-Ethylen-Polymerisat vom Typ der sogenannten « Block-Copolymerisate » hergestellt, indem man jeweils in einem bewegten Festbett (einem gerührten konzentrischen Festbett) aus kleinteiligem Polymerisat und in Abwesenheit eines flüssigen Reaktionsmediums aus der Gasphase heraus zunächst

(I) in der ersten Polymerisationszone Propylen durch kontinuierliche, getrennt dosierte Zufuhr eines Ziegler-Natta-Katalysatorsystems aus

(1) einer gemäß Beispiel 2 der GB-PS 1 485 181 hergestellten Titan-III-Komponente (Menge : 12,5 mmol/h, erechnet als Titan),

(2) Diethylaluminiumchlorid sowie

(3) n-Octadecyl-β-(4'-oxy-3',5'-di-tert.-butylphenyl)-propionat homopolymerisierte und dann

(II) in der zweiten Polymerisationszone ein Gemisch aus Propylen und Ethylen durch Zufuhr des in der ersten Polymerisationszone erhaltenen Reaktionsguts dem darin vorliegenden Propylen-Homopolymerisat hinzupolymerisierte,

mit den Maßgaben, daß (i) das Atomverhältnis Titan aus der Titan-III-Komponente (1) : Aluminium aus der Dialkylaluminiumchlorid-Komponente (2) 1 : 5 und das Molverhältnis Titan aus der Titan-III-Komponente (1) : weiterer Katalysatorkomponente (3) — d. h. dem n-Octadecyl-β-(4'-oxy-3',5'-di-tert.-butylphenyl)-propionat — 1 : 0,3 betrug und (ii) das Verhältnis Gewicht des in der ersten Polymerisationszone in Polymerisat umgesetztes Propylen : Gewicht des in der 2. Polymerisationszone in Polymerisat umgesetztes Gemisch aus Propylen und Ethylen 100 : 20 betrug.

Das Verfahren wurde erfindungsgemäß im einzelnen so durchgeführt, daß

a) in der ersten Polymerisationszone bei einem Gesamtdruck von 28 bar sowie einer Temperatur von 70 °C gearbeitet wurde, mit der Maßgabe, daß das Verhältnis Propylen-Partialdruck : Wasserstoff-Partialdruck (P/H-I) 100 : 0,8 betrug,

b) in der zweiten Polymerisationszone bei einem Gesamtdruck von 15 bar sowie einer Temperatur von 50 °C gearbeitet wurde, mit den Maßgaben, daß (i) das Verhältnis Propylen-Partialdruck : Ethylen-Partialdruck 100 : 25 und (ii) das Verhältnis Propylen-Partialdruck : Wasserstoff-Partialdruck (P/H-II) 100 : 14 betrug,

c) der Gesamtdruck in der ersten Polymerisationszone also um 13 bar höher gehalten wurde als der Gesamtdruck in der zweiten Polymerisationszone,

d) die Temperatur in der zweiten Polymerisationszone um 20 °C niedriger gewählt wurde als die Temperatur in der ersten Polymerisationszone, und

e) das Verhältnis Propylen-Partialdruck : Wasserstoff-Partialdruck in der ersten Polymerisationszone (P/H-I) zu dem Verhältnis Propylen-Partialdruck : Wasserstoff-Partialdruck in der zweiten Polymerisationszone (P/H-II) so eingestellt wurde, daß die Relation P/H-I : P/H-II einen Wert von 17,5 hatte.

Auf diese Weise wurden 18 kg/h Polymerisat mit einem Schmelzindex (gemessen bei 230 °C nach DIN 53 735) von 1,5 g/10 min erhalten ; es wies ebenfalls eine gute Schlagzähigkeit sowie gute morphologische Eigenschaften, insbesondere auch eine gute Rieselfähigkeit auf.

## Patentanspruch

Verfahren zum kontinuierlichen Herstellen von Propylen-Ethylen-Polymerisaten vom Typ der sogenannten « Block-Copolymerisate », wobei man jeweils in Anwesenheit von Wasserstoff als Molekular gewichtsregler in einem bewegten Festbett aus kleinteiligem Polymerisat bei Abwesenheit eines flüssigen Reaktionsmediums aus der Gasphase heraus zunächst

(I) in einer ersten Polymerisationszone Propylen durch Zufuhr eines Ziegler-Natta-Katalysatorsystems aus

(1) einer Tital-III-Komponente,

(2) einer Dialkylaluminiumchlorid-Komponente sowie

(3) — gegebenenfalls — einer weiteren Katalysator-Komponente homopolymerisiert und dann

(II) in einer zweiten Polymerisationszone ein Gemisch aus Propylen und Ethylen durch Zufuhr des in der ersten Polymerisationszone erhaltenen Reaktionsgut dem darin vorliegenden Propylen-Homopolymerisat hinzupolymerisiert,

mit den Maßgaben, daß (i) das Atomverhältnis Titan aus der Titan-III-Komponente (1) : Aluminium aus der Dialkylaluminiumchlorid-Komponente (2) im Bereich von 1 : 2 bis 1 : 15 liegt, und (ii) das Verhältnis Gewicht des in der ersten Polymerisationszone in Polymerisat umgesetztes Propylen : Gewicht des in der 2. Polymerisationszone in Polymerisat umgesetztes Gemisch aus Propylen und Ethylen 100 : 5 bis 100 : 30 beträgt, dadurch gekennzeichnet, daß

a) in der ersten Polymerisationszone bei einem Gesamtdruck von 11 bis 40 bar sowie einer Temperatur von 60 bis 80 °C gearbeitet wird, mit der Maßgabe, daß das Verhältnis Propylen-Partialdruck : Wasserstoff-Partialdruck (P/H-I) 100 : 0,1 bis 100 : 15 beträgt,

b) in der zweiten Polymerisationszone bei einem Gesamtdruck von 7 bis 20 bar sowie einer Temperatur von 50 bis 55 °C gearbeitet wird, mit den Maßgaben, daß (i) das Verhältnis Propylen-Partialdruck : Ethylen-Partialdruck 100 : 20 bis 100 : 50 und (ii) das Verhältnis Propylen-Partialdruck : Wasserstoff-Partialdruck (P/H-II) 100 : 5 bis 100 : 50 beträgt,

c) der Gesamtdruck in der ersten Polymerisationszone um wenigstens 10 bar höher gehalten wird als der Gesamtdruck in der zweiten Polymerisationszone,

d) die Temperatur in der zweiten Polymerisationszone um wenigstens 15 °C niedriger gewählt wird als die Temperatur in der ersten Polymerisationszone, und

e) das Verhältnis Propylen-Partialdruck : Wasserstoff-Partialdruck in der ersten Polymerisationszone (P/H-I) zu dem Verhältnis Propylen-Partialdruck : Wasserstoff-Partialdruck in der zweiten Polymerisationszone (P/H-II) so eingestellt wird, daß die Relation P/H-I : P/H-II einen Wert von 2 bis 70 hat.

## Claim

A process for the continuous preparation of propylene/ethylene block copolymers, in which, in an agitated fixed bed comprising small polymer particles, in each case in the presence of hydrogen as a molecular weight regulator and in the absence of a liquid reaction medium, first

(I) propylene is homopolymerized, from the gas phase, in a first polymerization zone, by feeding in a Ziegler-Natta catalyst comprising

(1) a titanium (III) component and

(2) a dialkyl-aluminium chloride component, with or without

(3) a further catalyst component, and then

(II) the product obtained in the first polymerization zone is fed into a second polymerization zone, where a mixture of propylene and ethylene is polymerized with the propylene homopolymer present in the product from the first polymerization zone,

with the provisos that (i) the atomic ratio of titanium from the titanium (III) component (1) to aluminium from the dialkyl-aluminum chloride component (2) is from 1 : 2 to 1 : 15, and (ii) the weight ratio of propylene converted to polymer in the first polymerization zone to the propylene/ethylene mixture converted to polymer in the second polymerization zone is from 100 : 5 to 100 : 30, wherein

a) in the first polymerization zone, the reaction is carried out under a total pressure of from 11 to 40 bar and at from 60 to 80 °C, with the proviso that the ratio of the partial pressure of propylene to that of hydrogen (P/H-I) is from 100 : 0.1 to 100 : 15,

b) in the second polymerization zone, the reaction is carried out under at total pressure of from 7 to 20 bar and at from 50 to 55 °C, with the provisos that (i) the ratio of the partial pressure of propylene to that of ethylene is from 100 : 20 to 100 : 50, and (ii) the ratio of the partial pressure of propylene to that of hydrogen (P/H-II) is from 100 : 5 to 100 : 50,

c) the total pressure in the first polymerization zone is kept not less than 10 bar higher than that in the second polymerization zone,

d) the temperature in the second polymerization zone is kept not less than 15 °C lower than that in the first polymerization zone, and

e) the relationship between the ratio partial pressure of propylene : partial pressure of hydrogen in the first polymerization zone (P/H-I) and the ratio partial pressure of propylene : partial pressure of hydrogen in the second polymerization zone (P/H-II) is set so that the ratio P/H-I : P/H-II is from 2 to 70.

## Revendication

Procédé de préparation en continu de polymères propylène/éthylène du type dit « copolymères séquencés », dans lequel on conduit chacune des opérations suivantes à partir de la phase gazeuse, en présence d'hydrogène servant de régulateur de poids moléculaire, dans un lit fixe de polymère en fines particules mis en mouvement et en l'absence d'un milieu réactionnel liquide :

(I) tout d'abord, dans une première zone de polymérisation, on homopolymérise du propylène par apport d'un système catalyseur de Ziegler-Natta composé de :

(1) un composant de titane trivalent,

(2) un composant chlorure de dialkylaluminium et

(3) le cas échéant, un autre composant de catalyseur, puis

(II) dans une seconde zone de polymérisation, par apport du produit réactionnel obtenu dans la première zone de polymérisation, on introduit par polymérisation, dans l'homopolymère de propylène présent dans ce produit, un mélange de propylène et d'éthylène,

étant spécifié que (i) le rapport atomique du titane du composant de titane trivalent (1) à l'aluminium du composant chlorure de dialkylaluminium (2) se situe dans la gamme de 1 : 2 à 1 : 15 et (ii) que le rapport du poids du propylène transformé en polymère dans la première zone de réaction au poids du mélange de propylène et d'éthylène transformé en polymère dans la seconde zone de polymérisation est compris entre 100 : 5 et 100 : 30, caractérisé en ce que :

a) dans la première zone de polymérisation, on opère sous une pression totale de 11 à 40 bars et à une température de 60 à 80 °C, étant spécifié que le rapport de la pression partielle de propylène à la pression partielle d'hydrogène (P/H-I) est compris entre 100 : 0,1 et 100 : 15,

b) dans la seconde zone de polymérisation, on opère sous une pression totale de 7 à 20 bars et à une température de 50 à 55 °C, étant spécifié que (i) le rapport de la pression partielle de propylène à la pression partielle d'éthylène est compris entre 100 : 20 et 100 : 50 et (ii) que le rapport de la pression partielle de propylène à la pression partielle d'hydrogène (P/H-II) est compris entre 100 : 5 et 100 : 50,

c) la pression totale dans la première zone de polymérisation est maintenue à un niveau plus élevé, d'au moins 10 bars, que la pression totale dans la seconde zone de polymérisation,

d) la température dans la seconde zone de polymérisation est choisie plus basse, d'au moins 15 °C, que la température dans la première zone de polymérisation, et

e) le rapport de la pression partielle de propylène à la pression partielle d'hydrogène dans la première zone de polymérisation (P/H-I) est réglé, en fonction du rapport de la pression partielle de propylène à la pression partielle d'hydrogène dans la seconde zone de polymérisation (P/H-II), de telle manière que la relation P/H-I : P/H-II ait une valeur de 2 à 70.